# EUROPEAN PATENT SPECIFICATION

(11) **EP 3 401 170 B1**
(45) Date of publication and mention of the grant of the patent: **11.12.2019**
(21) Application number: 18171889.1
(22) Date of filing: 11.05.2018
(51) Int. Cl.: B60T 7/10

(54) **BRAKING DEVICE**
BREMSGERÄT
DISPOSITIF DE FREINAGE

(30) Priority: 12.05.2017 IT 201700051988
(43) Date of publication of application: 14.11.2018
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- EP-A2- 2 962 912
- WO-A1-2016/185327
- FR-A1- 2 075 876
- FR-A1- 2 401 811

## Description

The present invention relates to a braking device.

A number of recently introduced regulations require that between a towing vehicle and the relative trailer a brake-trailer valve must be interposed provided with a pair of female couplings connectable to a pair of relative male couplings, where such female couplings are connectable to a control line which is adapted to supply the braking system of the trailer, and to an additional line which is adapted to deactivate the automatic and/or parking brake of the trailer respectively.

As the person skilled in the art knows, the braking phases of a vehicle are generally three in number, i.e. the service braking, which occurs in normal operating conditions of the vehicle, the parking braking, i.e. when the vehicle is stationary in the same position, and the emergency braking.

These regulations also require that for agricultural tractors with hydraulic braking of the trailer, during the emergency braking of the towing vehicle, the service braking of the trailer is also activated, so as to have a gradual braking of the same.

Document WO2016185327 describes a braking device according to the preamble of claim 1 of the present invention, which provides for a supporting body associable with the chassis of a towing vehicle, a command lever provided with a first portion, hinged to the supporting body and connected to first command means of the parking brake of the towing vehicle, and a second portion, hinged to the first portion and connected to second command means connected to the brake-trailer valve and activatable to send fluid under pressure along the relative control line. As a result of the lifting of the second portion, by effect of the hinge interposed between them, the first portion is also lifted, in such a way that during the emergency braking of the towing vehicle the trailer brakes gradually. This device also provides for third command means of the electrical type which are adapted to interact with the additional line of the brake-trailer valve to activate or deactivate the automatic and/or parking brake of the trailer. In particular, the third command means comprise two electric switches, one of which is adapted to interact with the first portion and is deactivated after the first portion is lifted, while the other can be activated by means of a button activatable manually by the operator and arranged on the second portion of the above-mentioned lever. This way, when the first and second portions are lifted (by operating the above-mentioned manual button) to activate the parking brake of the towing vehicle and the service brake of the trailer, the automatic and/or parking brake of the trailer remains inactive because one of the two electrical switches is activated. On the other hand, when the second portion is lowered (by releasing the manual button) to deactivate the service braking of the trailer while the first portion remains lifted, this being a condition which corresponds to the parking condition, the two electrical switches are both deactivated and the parking brake of the trailer therefore operates.

This braking device of known type does however have its drawbacks, inasmuch as because of the longitudinal extension of the lever itself, considerable force must be exerted to transmit the command to the corresponding switch, so that it is rather difficult to operate the third command means using the button located at the extremity of the second portion of the command lever.

Another drawback consists in the fact that the devices of known type necessarily require the use of a solenoid valve operatively connected to the brake-trailer valve and adapted to receive the signals from the electrical switches which are activated and deactivated from time to time As a result of the displacement of the first and of the second portions of the command lever. The use of this solenoid valve can therefore be a limit to the use of this type of device, inasmuch as an electrical malfunction may cause the failure to activate of the automatic and/or parking brake of the trailer.

Yet another drawback of these devices of known type consists in the fact that the simultaneous management of the emergency braking of the towing vehicle and service braking of the trailer is difficult. In fact, the hinge interposed between the two portions of the command lever requires reaching a certain inclination of the second portion in order to cause the lifting also of the first portion, which requires ample movements by the operator.

Last but not least of the drawbacks of the known device described above relates to the high longitudinal dimensions of the command lever.

Not the least disadvantage of the known device described above relates to the high longitudinal bulk of the control lever.

The main aim of the present invention is to provide a single braking device which allows commanding the automatic and/or parking brake of the trailer safely and easily.

In particular, one object of the present invention is to avoid that the activation of the automatic and/or parking brake of the trailer requires a great effort by the operator.

Within this aim, one object of the present invention is to allow commanding the automatic and/or parking brake of the trailer without resorting to the aid of electrical components.

Another object of the present invention is to facilitate, with respect to known devices, the management of the command of the parking brake F of the towing vehicle and of the service and parking braking of the trailer.

Yet another object is to reduce the longitudinal dimensions of the command lever and to simplify the maneuvering action by the operator.

Not the last object of the present invention is to provide a braking device which allows to overcome the mentioned drawbacks of the prior art within the ambit of a simple, rational, easy, effective to use and affordable solution.

The above mentioned objects are achieved by the present braking device according to claim 1.

Other characteristics and advantages of the present invention will become better evident from the description of a preferred, but not exclusive, embodiment of a braking device, illustrated by way of an indicative, but non-limiting, example in the accompanying drawings, wherein:

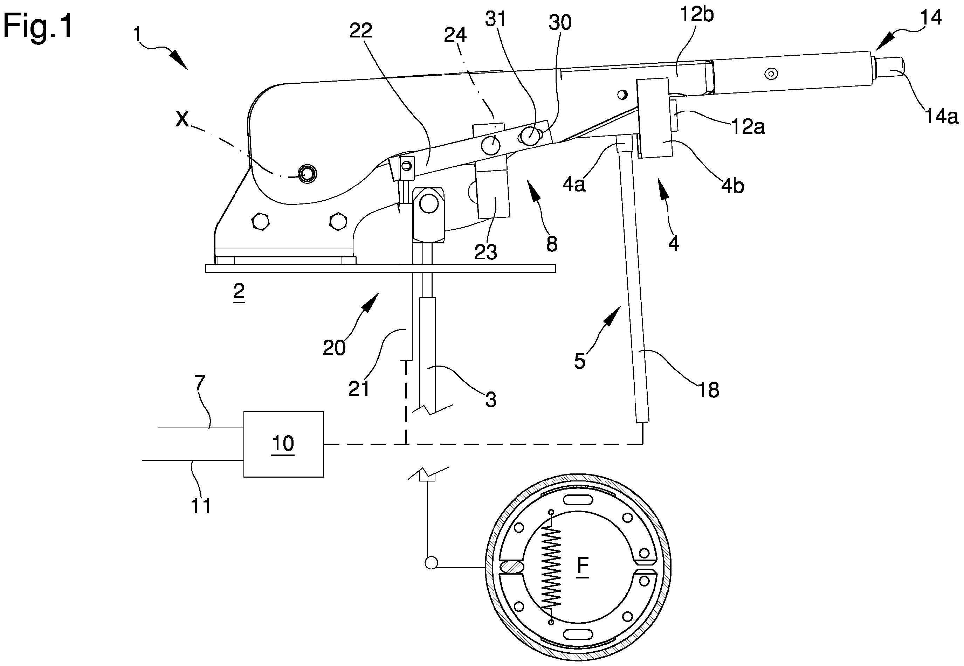

Figure 1 is a side elevation view of a braking device according to the invention, in a first embodiment, with the first and second portion in the home position;

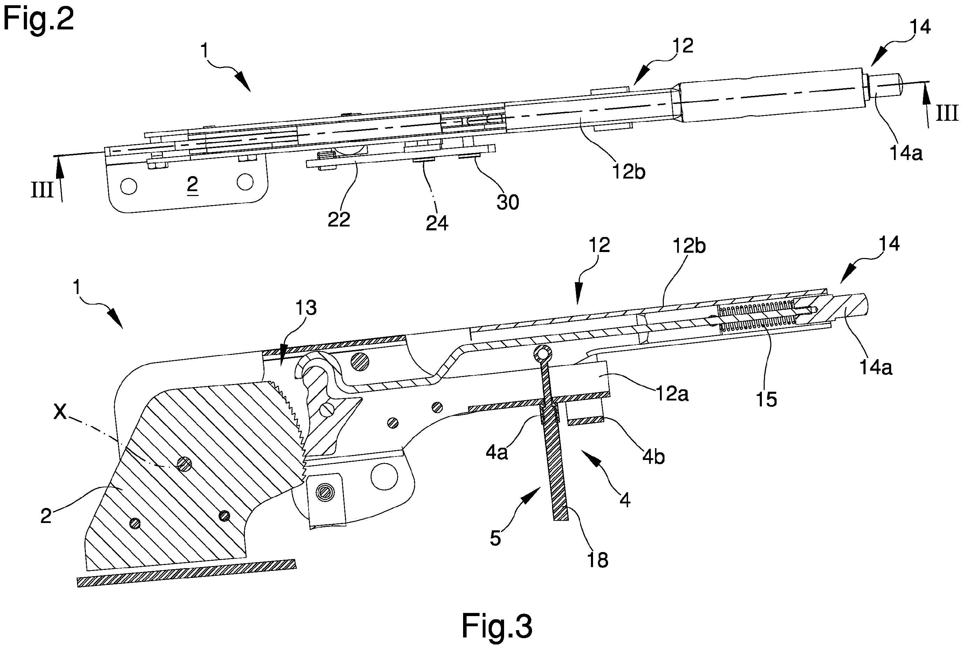

Figure 2 is a top plan view of the device of Figure 1;
Figure 3 is a sectional view of the device of Figure 2 along the track plane III-III;
Figures 4 to 6 are side elevation views of the device of Figure 1 in different operating conditions;
Figure 7 is a side elevation view of a braking device according to the invention, in a second embodiment.

With particular reference to such illustrations, reference numeral 1 globally indicates a braking device.

The device 1 comprises a base body 2, associable with the chassis of a towing vehicle, and at least one control apparatus 10 of the braking of a trailer which is adapted to adjust the pressure of a work fluid along a control line 7 connectable to the braking system of the trailer and along an additional line 11 operatively connected to the automatic and/or parking brake (not shown in the illustrations) of the trailer. In particular, until the additional line 11 is under pressure the automatic and/or parking brake of the trailer is deactivated, whereas when the pressure along the same drops to zero the automatic and/or parking brake is activated.

The device 1 then comprises first command means 3 associable with the parking brake of a towing vehicle (not shown in the illustrations) and actuatable for the operation of the same and second command means 5 connectable to the control apparatus 10 and adapted to adjust the pressure along the control line 7. More in detail, the second command means 5 are actuatable to send the work fluid under pressure along the control line 7, through the control apparatus 10, and thus operate the service braking of the trailer.

The device 1 also comprises a lever 12 which has at least a first portion 12a hinged to the body 2, associated with the first command means 3 and movable between a home position, wherein the first command means 3 are deactivated, and at least a braking position, wherein it is rotated with respect to the home position and the first command means 3 are activated.

Conveniently, the first portion 12a has a plurality of braking positions among which it moves continuously, by applying a gradually increasing force on the first command means 3.

Furthermore, blocking means 13 of the first portion 12a are also provided in the braking position. More particularly, the blocking means 13 are adapted to maintain the first portion 12a in the braking position achieved from time to time and are removable by means of a suitable command 14 to enable the return of the first portion itself to the home position. In the embodiments shown in the illustrations, the blocking means 13 are of the type of a ratchet lever and the command 14 is of the type of a button 14a which counteracts the elastic means 15, e.g. of the type of a spring, for lifting the lever and disengaging it from the teeth of the ratchet.

Advantageously, the first command means 3 are of the mechanical type.

More in detail, the first command means 3 comprise at least a first flexible and inextensible cable, associated with the first portion 12a, which is adapted to pull the first cable itself as a result of its rotation from the home position towards the braking position.

As the first portion 12a rotates away from the braking position, the intensity of the traction force applied on the cable 3 increases.

The lever 12 also comprises at least a second portion 12b, graspable by an operator, hinged to the first portion 12a, which is associated with the second command means 5 and movable between a home position, wherein the second command means 5 are deactivated, and at least a braking position, wherein it is rotated with respect to the home position and the second command means 5 are activated so as to operate the service braking of the trailer.

Advantageously, the first portion 12a is hinged to the body 2 around an axis X of rotation and the second portion 12b is in turn hinged to the first portion 12a around the same axis X of rotation. Therefore, both the first and the second portions 12a and 12b rotate around the same axis X of rotation.

In the embodiment shown in the illustrations, the second portion 12b is fitted above the first portion 12a. In other words, the first portion 12a is arranged inside the second portion 12b.

Suitably, interconnection means 4 are provided, which are connected to the second portion 12b, which are adapted to interact with the first portion 12a as a result of the operation of the second portion 12b, to displace it to the relevant braking position.

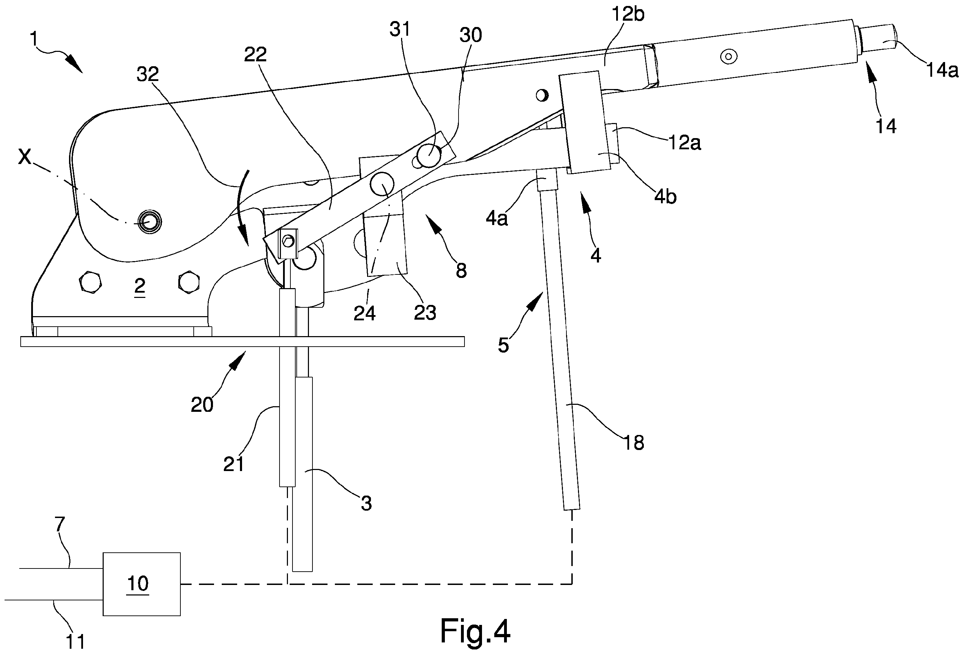

As a result of the operation of the second portion 12b, i.e. its lifting from the home position, both the second portion itself and the first portion 12a move to a corresponding braking position by rotating around the axis X. The rotation of the second portion 12b around the axis X does in fact involve the exercising of a force on the first portion 12a through the interconnection means 4, which causes the rotation thereof around the axis X. This operating condition corresponds to an emergency condition, as a result of which both the parking brake of the towing vehicle and the service braking of the trailer are activated, as shown in Figure 4.

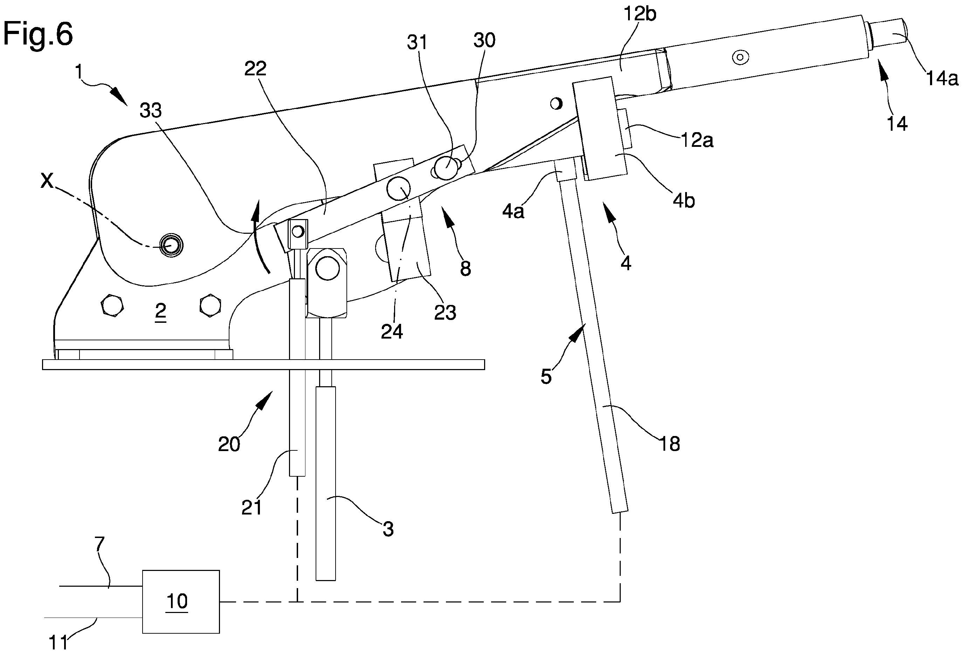

As a result of the release of the second portion 12b, the latter returns to the home position, while the first portion 12a remains in the braking position taken due to the blocking means 13. This operating condition corresponds to the parking condition, shown in Figure 6, wherein the parking brake of the towing vehicle is activated and the service braking of the trailer is deactivated.

In the embodiment shown in the illustrations, the second command means 5 are of the mechanical type and comprise at least a second flexible and inextensible cable 18 associated with the second portion 12b, which is adapted to pull the second cable 18 as a result of its rotation towards the braking position. In this case too, as the second portion 12b rotates around the axis X away from the home position, the pulling force applied on the second cable 18 increases. Advantageously, the interconnection means 4 comprise at least a first abutment element 4a associated with the second cable 18, e.g. of the type of a sheath which covers the second cable itself, and adapted to interact with the first portion 12a as a result of the achievement of a first predefined angle of rotation of the second portion 12b with respect to the first portion 12a. In other words, as a result of the lifting of the second portion 12b from the home position, this rotates around the axis X with respect to the first portion 12a which, on the other hand, remains in the relative home position. As soon as the second portion 12b reaches the above-mentioned first angle of rotation with respect to the first portion 12a, the first abutment element 4a contacts the first portion itself, so that the further lifting of the second portion 12b also causes the first portion 12a to displace towards the relative braking position.

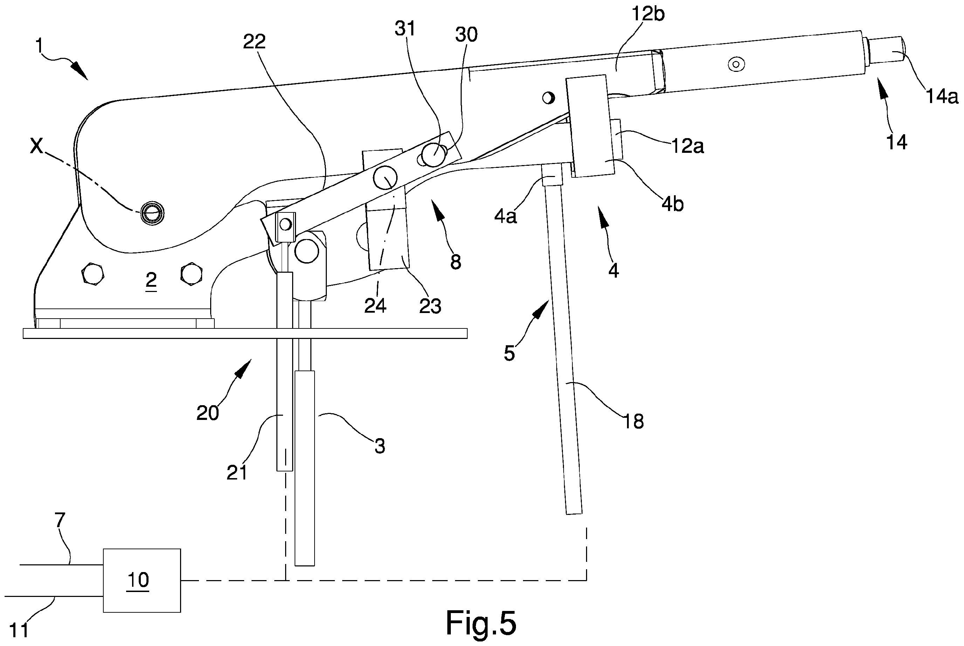

Preferably, the interconnection means 4 also comprise at least a second abutment element 4b associated with the second portion 12b and adapted to interact with the first portion 12a as a result of the achievement of a second predefined angle of rotation of the second portion itself with respect to the first portion 12a, wherein this second angle of rotation has greater width than the first above mentioned angle. This operating condition is shown in Figure 5. More in detail, the second abutment element 4b operates in case of an emergency, for example in the case wherein the second cable 18 breaks out, so as to activate the parking braking of the towing vehicle.

The device 1 further comprises third command means 20 operatively connected to the control apparatus 10 and which are adapted to control the work fluid pressure along the additional line 11 to manage the state of the automatic and/or parking brake of the trailer.

The third command means 20 can be operated between a normal operating position, in which they maintain the work fluid under pressure along the additional line 11 to maintain the automatic and/or parking brake of the trailer deactivated, and a parking position, in which they reset the work fluid pressure along the additional line 11 so as to activate the automatic and/or parking brake itself.

The device 1 then comprises activation means 8 of the third command means 20 operatively connected to the lever 12 and susceptible to displacing from a first work position, in which they maintain the third command means 20 in the normal operating position, to a second work position, in which they move the third command means 20 to the parking position, as a result of the movement of the first portion 12a to the braking position and of the second portion 12b to the home position.

According to the invention, the activation means 8 comprise at least one command lever 22 hinged around a fulcrum 24, one supporting element 23 of the fulcrum 24, the supporting element 23 being locked together with the first portion 12a, where the command lever 22 is connected, on opposite sides to the fulcrum 24, to the second portion 12b and to the third command means 20. More in detail, the command lever 22 is connected to the second portion 12b by means of a slot 30 having an elongated shape inside which a pin 31 locked together with the second portion is inserted sliding.

Therefore, as a result of the rotation of the second portion 12b with respect to the first portion 12a during its displacement towards the relative braking position, the command lever 22 rotates in a first way 32 (counterclockwise in the attached illustrations) with respect to the supporting element 23 so as to maintain the third command means 20 in the normal operating position. In other words, as a result of the rotation of the command lever 22 along the first way 32, the pin 31 slides inside the relative slot 30 and the portion connected to the third command means 20 displaces downwards. The command lever 22 instead rotates around the fulcrum 24 along a second way 33, opposite to the first way 32, as a result of the return of the second portion 12b to the home position with the first portion 12a in the relative braking position due to the blocking means 13, so as to bring the third command means 20 to the parking position.

Advantageously, the third command means 20 are of the mechanical type.

In particular, in the embodiment shown in the illustrations 1 to 6, the third command means 20 comprise an inextensible cable 21 associated with the command lever 22 on the opposite side of the second portion 12b with respect to the fulcrum 24. The command lever 22 is adapted not to pull the third cable 21 as a result of its rotation in the first way 32 and to pull it as a result of its rotation in the second way 33.

It follows, therefore, that when the second portion 12b is moved towards the braking position, as to apply the emergency braking or to keep the towing vehicle stopped to start off on a gradient, the second portion 12b moves away from the first portion 12a to complete the aforementioned first angle of rotation, as a result of which the first abutment element 4a contacts the first portion 12a, the command lever 22 rotates in the first way 32 loosening the third cable 21. In this operating condition, which corresponds to an emergency condition, the parking brake of the trailer remains inactive.

When the first and second portions 12a and 12b are both in their respective braking positions, so that the parking braking of the towing vehicle and the service braking of the trailer are activated, as soon as the second portion 12b is lowered to return to the home position, the relative movement it makes with respect to the first portion 12a causes the command lever 22 to rotate in the second way 33, so that the portion of the command lever 22 with which the third cable 21 is associated lifts, pulling the third cable itself and activating the parking braking of the trailer. This operating condition corresponds to the parking condition, in which the parking brake of the towing vehicle is activated and the service brake of the trailer is deactivated.

The command lever 22 is also adapted to pull the third cable 21, to bring this from the normal operating position to the parking position, as a result of the rotation of the first and of the second portion 12a and 12b with respect to the body 2, around the axis X, by a third angle of predefined width. This operating condition, not shown in the illustrations, corresponds in practice to the operating condition in which the level of the emergency braking of the towing vehicle exceeds a predefined value, thereby causing the automatic or parking braking of the trailer to be activated.

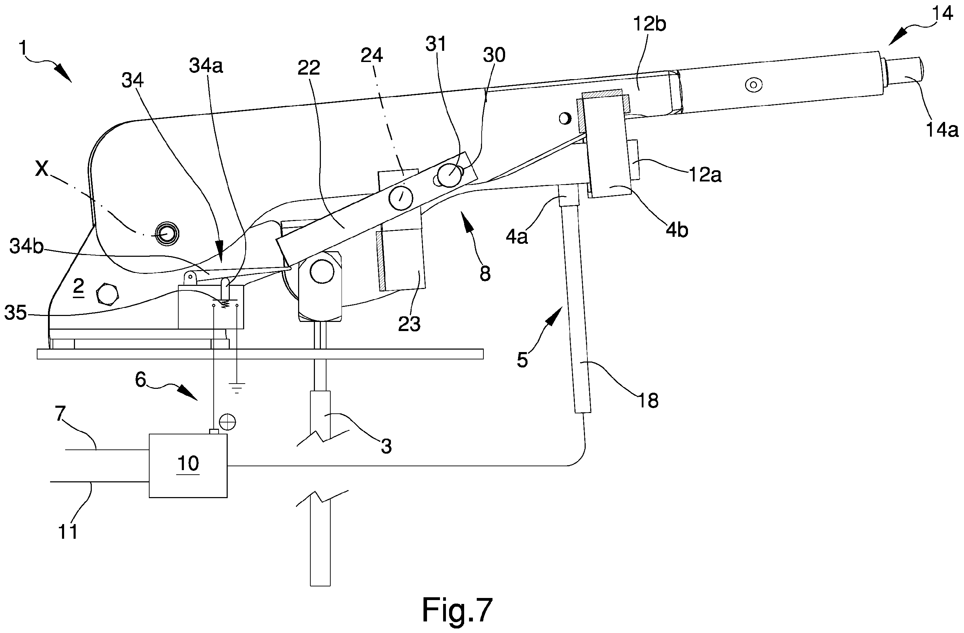

In an alternative embodiment, shown in Figures 7 and 8, the third command means 20 are of the electric type.

Advantageously, the third command means 20 comprise at least an electrical circuit 6, for example connected to a supply source, operatively connected to the control apparatus 10, which is adapted to enable and prevent the flow of the work fluid along the additional line 11 as a result of the current flow and cutoff along the electrical circuit 6, respectively.

More in detail, the electric circuit 6 is connected to a solenoid 16 in turn operatively connected to the control apparatus 10. As a result of the passage of the current along the electric circuit 6 the solenoid 16 activates allowing the passage of the work fluid along the additional line 11, while when the current passage is interrupted the solenoid 16 goes into the inactive state and the control apparatus 10 placed the additional line 11 in communication with the exhaust thus causing the activation of the automatic and/or parking brake of the trailer. The supply source may consist, e.g., of the supply battery of the towing vehicle. In the embodiment of Figure 7, the activation means 8 also comprise at least one activation element 34 electrically connected to the third command means 20, which is movable between a first and a second work position to bring the third command means themselves to the normal operating position and to the parking position respectively, and is operatively connected to the command lever 22. In particular, the command lever 22 is adapted to bring the activation element 34 to the first work position as a result of its rotation along the first way 32 and to bring it to the second work position as a result of its rotation along the second way 33.

Preferably, the activation element 34 comprises a switch 34a, which in normal operating conditions is in the open position, elastic means 35 being provided to push the switch 34a towards the relative second work position, and a lever command 34b kinematically connected to the command lever 22 and adapted to interact with the switch 34a. The lever command 34b is then moved by the command lever 22 during its rotation along the first way 32 so as to push the switch 34a towards the closed position, while it is lifted due to the rotation of the command lever 22 along the second way 33, thus allowing the switch 34a to return to the open position.

It has in practice been ascertained that the described invention achieves the intended objects and, in particular, the fact is underlined that the use of mechanical means, such as the command lever described above and claimed, capable of rotating around the relative fulcrum in both ways, makes it possible to easily and practically command the operation of the automatic and/or parking brake of the trailer.

This mechanism also makes it possible to command, both electrically and mechanically, depending on the option considered most suitable for the specific case, the automatic and/or parking brake of the trailer.

Furthermore, the fact that the first portion of the lever is hinged to the fixed body of the device around which the second portion of the lever is hinged to the first portion itself makes it considerably easier, with respect to known devices, to manage the command of the parking brake of the towing vehicle and of the service and parking braking of the trailer.

In particular, the conformation of the lever of the device in question makes it possible to reduce the effort and maneuvering space required by the operator to activate the parking braking of the towing vehicle and the service braking of the trailer.

## Claims

1. Braking device (1), comprising:
- a base body (2) associable with the frame of a towing vehicle;
- at least one control apparatus (10) of the braking of a trailer adapted to adjust the pressure of a work fluid along a control line (7) connectable to the braking system of the trailer and along an additional line (11) operatively connectable to the automatic and/or parking brake of the trailer itself;
- first command means (3) associable at least with the parking brake of the towing vehicle and actuatable for the operation of the same;
- second command means (5) operatively connected to said control apparatus (10) and actuatable to send a work fluid under pressure along said control line (7) and operate the braking of the trailer;
- third command means (20) operatively connected to said control apparatus (10) and operable between a normal operating position, in which they maintain the work fluid under pressure along said additional line (11) in order to maintain the automatic and/or parking brake deactivated, and a parking position, in which they reset the pressure of the work fluid along said additional line (11) so as to activate the automatic and/or parking brake;
- a lever (12) comprising at least a first portion (12a) hinged to said body (2), associated with said first command means (3) and movable between a home position and at least a braking position in which the first command means themselves are deactivated and activated respectively, there being provided removable blocking means (13) of said first portion (12a) in said braking position, and at least a second portion (12b), graspable by an operator, hinged to said first portion (12a), which is associated with said second command means (5) and movable between a home position and at least a braking position in which said second command means (5) are deactivated and activated, respectively;
- activation means (8) of said third command means (20) operatively connected to said lever (12) and adapted to displace from a first work position, in which they maintain said third command means (20) in the normal operating position, to a second work position, in which they bring said third command means (20) to the parking position, as a result of the displacement of said first and of said second portion (12a, 12b) to the relevant braking position and home position respectively;
**characterized by** the fact that said activation means (8) comprise at least one command lever (22) hinged around a fulcrum (24), at least one supporting element (23) of said fulcrum (24) locked together with said first portion (12a), wherein said command lever (22) is connected, on opposite sides of the fulcrum itself, to said second portion (12b) and to said third command means (20) respectively, said command lever (22) rotating in a first way (32) as a result of the relative rotation of said second portion (12b) with respect to said first portion (12a) during the displacement of the second portion itself towards the relative braking position, so as to maintain said third command means (20) in the normal operating position, and rotating in a second way (33) opposite to the previous one, as a result of the return of said second portion (12b) to the home position and with said first portion (12a) in the braking position, so as to bring said third command means (20) to the parking position.

2. Device (1) according to claim 1, **characterized by** the fact that said first portion (12a) is hinged to said body (2) around an axis (X) of rotation and that said second portion (12b) is hinged to said first portion (12a) around said same axis (X) of rotation, there being provided interconnection means (4) which are connected to said second portion (12b) and adapted to interact with said first portion (12a), as a result of the operation of said second portion (12b), to displace it to the relevant braking position, said first and second portion (12a, 12b) rotating around said axis (X), while as a result of the release of said second portion (12b) the latter returns to its home position and said first portion (12a) remains still in the braking position due to said blocking means (13).

3. Device (1) according to claim 2, **characterized by** the fact that said second portion (12b) is fitted above said first portion (12a).

4. Device (1) according to one or more of the preceding claims, **characterized by** the fact that said interconnection means (4) comprise at least a first abutment element (4a) associated with said second cable (18) and adapted to interact with said first portion (12a) as a result of the achievement of a first predefined angle of rotation of said second portion (12b) around said axis (X) with respect to said first portion (12a).

5. Device (1) according to claim 4, **characterized by** the fact that said interconnection means (4) comprise at least a second abutment element (4b) associated with said second portion (12b) and adapted to interact with said first portion (12a) as a result of the achievement of a second predefined angle of rotation around said axis (X) of said second portion (12b) with respect to said first portion (12a), wherein said second angle of rotation has greater width than said first angle of rotation.

6. Device (1) according to one or more of the preceding claims, **characterized by** the fact that said first command means (3) are of the mechanical type and comprise at least a first inextensible cable associated with said first portion (12a), the latter being adapted to pull said first cable as a result of its rotation towards said braking position.

7. Device (1) according to one or more of the preceding claims, **characterized by** the fact that said second command means (5) are of the mechanical type and comprise a second inextensible cable (18) associated with said second portion (12b), the latter being adapted to pull said second cable (18) as a result of its rotation towards said braking position.

8. Device (1) according to one or more of the preceding claims, **characterized by** the fact that said third command means (20) are of the mechanical type and comprise a third inextensible cable (21), said command lever (22) being associated with said third cable (21) and being adapted not to pull and to pull the third cable itself as a result of the rotation along said first way (32) and along said second way (33), respectively.

9. Device (1) according to claim 8, **characterized by** the fact that said command lever (22) is adapted to pull said third cable (21), to bring it from the normal operating position to the parking position, as a result of the rotation of said first and second portion (12a, 12b) around said axis (X) with respect to said body (2) by a third predefined angle of rotation.

10. Device (1) according to one or more of claims 1 to 7, **characterized by** the fact that said third command means (20) are of the electric type.

11. Device (1) according to claim 10, **characterized by** the fact that said activation means (8) comprise at least one activation element (34) electrically connected to said third command means (20) and movable between a first and a second work position in which it brings the third command means themselves in the normal operating position and in the parking position respectively, said command lever (22) being operatively connected to said activation element (34) to bring it to the first work position as a result of the rotation along said first way (32) and to bring it to the second work position as a result of the rotation along said second way (33).

12. Device (1) according to claim 11, **characterized by** the fact that said third command means (20) comprise at least an electrical circuit (6) operatively connected to said control apparatus (10), the latter permitting and preventing the flow of the work fluid along said additional line (11) as a result of the current flow and cutoff along said electrical circuit (6), respectively, and by the fact that said activation element (34) is adapted to close and open said electrical circuit (6) in the first and second work position, respectively.

## Patentansprüche

1. Bremsvorrichtung (1), umfassend:
- einen Grundkörper (2), der mit dem Rahmen eines Zugfahrzeugs verbindbar ist;
- mindestens eine Steuervorrichtung (10) für das Bremsen eines Anhängers, die geeignet ist, um den Druck eines Arbeitsfluids entlang einer Steuerleitung (7), die mit dem Bremssystem des Anhängers verbindbar ist, und entlang einer zusätzlichen Leitung (11), die wirksam mit der automatischen und/oder Feststellbremse des Anhängers selbst verbindbar ist, einzustellen;
- erste Befehlsmittel (3), die zumindest mit der Feststellbremse des Zugfahrzeugs verbindbar und für den Betrieb desselben betätigbar sind;
- zweite Befehlsmittel (5), die wirksam mit der Steuervorrichtung (10) verbunden und betätigbar sind, um ein Arbeitsfluid unter Druck entlang der Steuerleitung (7) zu senden und die Bremse des Anhängers zu betätigen;
- dritte Befehlsmittel (20), die wirksam mit der Steuervorrichtung (10) verbunden und zwischen einer normalen Betriebsposition, in der sie das Arbeitsfluid entlang der zusätzlichen Leitung (11) unter Druck halten, um die automatische und/oder Feststellbremse deaktiviert zu halten, und einer Parkposition betätigbar sind, in der sie den Druck des Arbeitsfluids entlang der zusätzlichen Leitung (11) zurücksetzen, um die automatische und/oder Feststellbremse zu aktivieren;
- einen Hebel (12), der mindestens einen ersten Abschnitt (12a) umfasst, der an dem Körper (2) angelenkt ist, mit den ersten Befehlsmitteln (3) verbunden ist und zwischen einer Ausgangsposition und mindestens einer Bremsposition beweglich ist, in der die ersten Befehlsmittel selbst deaktiviert bzw. aktiviert sind, wobei abnehmbare Sperrmittel (13) des ersten Abschnitts (12a) in der Bremsposition vorgesehen sind, und mindestens einen zweiten Abschnitt (12b), der von einem Bediener greifbar ist und an dem ersten Abschnitt (12a) angelenkt ist, der mit den zweiten Befehlsmitteln (5) verbunden ist und zwischen einer Ausgangsposition und mindestens einer Bremsposition beweglich ist, in der die zweiten Befehlsmittel (5) deaktiviert bzw. aktiviert sind;
- Aktivierungsmittel (8) der dritten Befehlsmittel (20), die wirksam mit dem Hebel (12) verbunden und geeignet sind, um von einer ersten Arbeitsposition, in der sie die dritten Befehlsmittel (20) in der normalen Betriebsposition halten, in eine zweite Arbeitsposition zu verschieben, in der sie die dritten Befehlsmittel (20) in die Parkposition bringen, als Ergebnis der Verschiebung des ersten und des zweiten Abschnitts (12a, 12b) in die entsprechende Bremsposition bzw. Ausgangsposition;
**dadurch gekennzeichnet, dass** die Aktivierungsmittel (8) mindestens einen Befehlshebel (22) umfassen, der um einen Drehpunkt (24) schwenkbar ist, mindestens ein Stützelement (23) des Drehpunkts (24), das mit dem ersten Abschnitt (12a) verbunden ist, wobei der Befehlshebel (22) auf gegenüberliegenden Seiten des Drehpunkts selbst mit dem zweiten Abschnitt (12b) bzw. mit den dritten Befehlsmitteln (20) verbunden ist, wobei der Befehlshebel (22) sich auf einem ersten Weg (32) als Ergebnis der relativen Drehung des zweiten Abschnitts (12b) in Bezug auf den ersten Abschnitt (12a) während der Verschiebung des zweiten Abschnitts selbst in Richtung der relativen Bremsposition dreht, um die dritten Befehlsmittel (20) in der normalen Betriebsposition zu halten, und in auf einem zweitenWeg (33) entgegengesetzt zu dem vorherigen dreht, als Ergebnis der Rückkehr des zweiten Abschnitts (12b) in die Ausgangsposition und mit dem ersten Abschnitt (12a) in der Bremsposition, um die dritten Befehlsmittel (20) in die Parkposition zu bringen.

2. Vorrichtung (1) nach Anspruch 1, **dadurch gekennzeichnet, dass** der erste Abschnitt (12a) an dem Körper (2) um eine Drehachse (X) angelenkt ist und dass der zweite Abschnitt (12b) an dem ersten Abschnitt (12a) um dieselbe Drehachse (X) angelenkt ist, wobei Verbindungsmittel (4) vorgesehen sind, die mit dem zweiten Abschnitt (12b) verbunden und zum Zusammenwirken mit dem ersten Abschnitt (12a) geeignet sind, als Ergebnis der Betätigung des zweiten Abschnitts (12b), um ihn in die entsprechende Bremsposition zu verschieben, wobei sich der erste und zweite Abschnitt (12a, 12b) um die Achse (X) drehen, während als Ergebnis der Freigabe des zweiten Abschnitts (12b) der letztere in seine Ausgangsposition zurückkehrt und der erste Abschnitt (12a) aufgrund der Sperrmittel (13) noch in der Bremsposition bleibt.

3. Vorrichtung (1) nach Anspruch 2, **dadurch gekennzeichnet, dass** der zweite Abschnitt (12b) über dem ersten Abschnitt (12a) angebracht ist.

4. Vorrichtung (1) nach einem oder mehreren der vorhergehenden Ansprüche, **dadurch gekennzeichnet, dass** die Verbindungsmittel (4) mindestens ein erstes Abstützelement (4a) umfassen, das mit dem zweiten Kabel (18) verbunden ist und geeignet ist, um mit dem ersten Abschnitt (12a) als Ergebnis der Erreichung eines ersten vordefinierten Drehwinkels des zweiten Abschnitts (12b) um die Achse (X) in Bezug auf den ersten Abschnitt (12a) zusammenzuwirken.

5. Vorrichtung (1) nach Anspruch 4, **dadurch gekennzeichnet, dass** die Verbindungsmittel (4) mindestens ein zweites Abstützelement (4b) umfassen, das mit dem zweiten Abschnitt (12b) verbunden ist und geeignet ist, um mit dem ersten Abschnitt (12a) als Ergebnis der Erreichung eines zweiten vordefinierten Drehwinkels um die Achse (X) des zweiten Abschnitts (12b) in Bezug auf den ersten Abschnitt (12a) zusammenzuwirken, wobei der zweite Drehwinkel eine größere Weite als der erste Drehwinkel aufweist.

6. Vorrichtung (1) nach einem oder mehreren der vorhergehenden Ansprüche, **dadurch gekennzeichnet, dass** die ersten Befehlsmittel (3) vom mechanischen Typ sind und mindestens ein erstes unausdehnbares Kabel umfassen, das mit dem ersten Abschnitt (12a) verbunden ist, wobei das letztere geeignet ist, das erste Kabel als Ergebnis seiner Drehung in Richtung der Bremsposition zu ziehen.

7. Vorrichtung (1) nach einem oder mehreren der vorhergehenden Ansprüche, **dadurch gekennzeichnet, dass** die zweiten Befehlsmittel (5) vom mechanischen Typ sind und ein zweites unausdehnbares Kabel (18) umfassen, das mit dem zweiten Abschnitt (12b) verbunden ist, wobei das letztere geeignet ist, das zweite Kabel (18) als Ergebnis seiner Drehung in Richtung der Bremsposition zu ziehen.

8. Vorrichtung (1) nach einem oder mehreren der vorhergehenden Ansprüche, **dadurch gekennzeichnet, dass** die dritten Befehlsmittel (20) vom mechanischen Typ sind und ein drittes unausdehnbares Kabel (21) umfassen, wobei der Befehlshebel (22) mit dem dritten Kabel (21) verbunden ist und geeignet ist, das dritte Kabel selbst als Ergebnis der Drehung entlang des ersten Weges (32) bzw. entlang des zweiten Weges (33) nicht zu ziehen beziehungsweise zu ziehen.

9. Vorrichtung (1) nach Anspruch 8, **dadurch gekennzeichnet, dass** der Befehlshebel (22) geeignet ist, um das dritte Kabel (21) zu ziehen, um es aus der normalen Betriebsposition in die Parkposition zu bringen, als Ergebnis der Drehung des ersten und zweiten Abschnitts (12a, 12b) um die Achse (X) in Bezug auf den Körper (2) um einen dritten vorbestimmten Drehwinkel.

10. Vorrichtung (1) nach einem oder mehreren der Ansprüche 1 bis 7, **dadurch gekennzeichnet, dass** die dritten Befehlsmittel (20) vom elektrischen Typ sind.

11. Vorrichtung (1) nach Anspruch 10, **dadurch gekennzeichnet, dass** die Aktivierungsmittel (8) mindestens ein Betätigungselement (34) umfassen, das elektrisch mit den dritten Befehlsmitteln (20) verbunden und zwischen einer ersten und einer zweiten Arbeitsposition beweglich ist, in der sie die dritten Befehlsmittel selbst in die normale Betriebsposition bzw. in die Parkposition bringt, wobei der Befehlshebel (22) wirksam mit dem Betätigungselement (34) verbunden ist, um es als Ergebnis der Drehung auf dem ersten Weg (32) in die erste Arbeitsposition zu bringen und es als Ergebnis der Drehung auf dem zweiten Weg (33) in die zweite Arbeitsposition zu bringen.

12. Vorrichtung (1) nach Anspruch 11, **dadurch gekennzeichnet, dass** die dritten Befehlsmittel (20) mindestens eine elektrische Schaltung (6) umfassen, die wirksam mit der Steuervorrichtung (10) verbunden ist, wobei die letztere den Durchfluss des Arbeitsfluids entlang der zusätzlichen Leitung (11) als Ergebnis des Stromflusses bzw. der Unterbrechung entlang der elektrischen Schaltung (6) zulässt bzw. verhindert, und dadurch, dass das Betätigungselement (34) zum Schließen und Öffnen der elektrischen Schaltung (6) in der ersten bzw. zweiten Arbeitsposition geeignet ist.

## Revendications

1. Dispositif de freinage (1), comprenant :
- un corps de base (2) pouvant être associé au châssis d'un véhicule tracteur ;
- au moins un appareil de contrôle (10) du freinage d'une remorque, adapté pour ajuster la pression d'un fluide de travail le long d'une ligne de contrôle (7) pouvant être connectée au système de freinage de la remorque et le long d'une ligne supplémentaire (11) pouvant être connectée de manière fonctionnelle au frein automatique et/ou de stationnement de la remorque elle-même ;
- des premiers moyens de commande (3) pouvant être associés au moins au frein de stationnement du véhicule tracteur et pouvant être actionnés pour le fonctionnement de celui-ci ;
- des deuxièmes moyens de commande (5) connectés de manière fonctionnelle audit appareil de contrôle (10) et pouvant être actionnés pour envoyer un fluide de travail sous pression le long de ladite ligne de contrôle (7) et faire fonctionner le freinage de la remorque ;
- des troisièmes moyens de commande (20) connectés de manière fonctionnelle audit appareil de contrôle (10) et pouvant fonctionner entre une position de fonctionnement normale, dans laquelle ils maintiennent le fluide de travail sous pression le long de ladite ligne supplémentaire (11) afin de maintenir le frein automatique et/ou de stationnement désactivé, et une position de stationnement, dans laquelle ils réinitialisent la pression du fluide de travail le long de ladite ligne supplémentaire (11) de façon à activer le frein automatique et/ou de stationnement ;
- un levier (12) comprenant au moins une première partie (12a) reliée par charnière audit corps (2), associée auxdits premiers moyens de commande (3) et mobile entre une position initiale et au moins une position de freinage dans laquelle les premiers moyens de commande eux-mêmes sont désactivés et activés respectivement, des moyens de blocage amovibles (13) de ladite première partie (12a) dans ladite position de freinage étant prévus, et au moins une seconde partie (12b), pouvant être saisie par un opérateur, reliée par charnière à ladite première partie (12a), qui est associée auxdits deuxièmes moyens de commande (5) et mobile entre une position initiale et au moins une position de freinage dans laquelle lesdits deuxièmes moyens de commande (5) sont désactivés et activés, respectivement ;
- des moyens d'activation (8) desdits troisièmes moyens de commande (20) connectés de manière fonctionnelle audit levier (12) et adaptés pour se déplacer à partir d'une position de travail, dans laquelle ils maintiennent lesdits troisièmes moyens de commande (20) dans la position de fonctionnement normale, jusqu'à une seconde position de travail, dans laquelle ils amènent lesdits troisièmes moyens de commande (20) à la position de stationnement, à la suite du déplacement de ladite première et de ladite seconde partie (12a, 12b) jusqu'à la position de freinage et la position initiale pertinentes respectivement ;
**caractérisé par le fait que** lesdits moyens d'activation (8) comprennent au moins un levier de commande (22) relié par charnière autour d'un pivot (24), au moins un élément de support (23) dudit pivot (24) étant verrouillé conjointement avec ladite première partie (12a), dans lequel ledit levier de commande (22) est connecté, sur des côtés opposés du pivot lui-même, à ladite seconde partie (12b) et auxdits troisièmes moyens de commande (20) respectivement, ledit levier de commande (22) tournant dans une première direction (32) à la suite de la rotation relative de ladite seconde partie (12b) par rapport à ladite première partie (12a) durant le déplacement de la seconde partie elle-même vers la position de freinage relative, de façon à maintenir lesdits troisièmes moyens de commande (20) dans la position de fonctionnement normale, et tournant dans une seconde direction (33) opposée à la première, à la suite du retour de ladite seconde partie (12b) à la position initiale et avec ladite première partie (12a) dans la position de freinage, de façon à amener lesdits troisièmes moyens de commande (20) à la position de stationnement.

2. Dispositif (1) selon la revendication 1, **caractérisé par le fait que** ladite première partie (12a) est reliée par charnière audit corps (2) autour d'un axe (X) de rotation et que ladite seconde partie (12b) est reliée par charnière à ladite première partie (12a) autour dudit même axe (X) de rotation, qu'il comprend des moyens d'interconnexion (4) qui sont connectés à ladite seconde partie (12b) et adaptés pour interagir avec ladite première partie (12a) étant prévus, à la suite du fonctionnement de ladite seconde partie (12b), pour la déplacer jusqu'à la position de freinage pertinente, ladite première et ladite seconde partie (12a, 12b) tournant autour dudit axe (X), tandis qu'à la suite de la libération de ladite seconde partie (12b) cette dernière retourne à sa position initiale et ladite première partie (12a) reste toujours dans la position de freinage en raison desdits moyens de blocage (13).

3. Dispositif (1) selon la revendication 2, **caractérisé par le fait que** ladite seconde partie (12b) est montée au-dessus de ladite première partie (12a).

4. Dispositif (1) selon une ou plusieurs des revendications précédentes, **caractérisé par le fait que** lesdits moyens d'interconnexion (4) comprennent au moins un premier élément de butée (4a) associé audit deuxième câble (18) et adapté pour interagir avec ladite première partie (12a) à la suite de l'obtention d'un premier angle de rotation prédéfini de ladite seconde partie (12b) autour dudit axe (X) par rapport à ladite première partie (12a).

5. Dispositif (1) selon la revendication 4, **caractérisé par le fait que** lesdits moyens d'interconnexion (4) comprennent au moins un second élément de butée (4b) associé à ladite seconde partie (12b) et adapté pour interagir avec ladite première partie (12a) à la suite de l'obtention d'un deuxième angle de rotation prédéfini autour dudit axe (X) de ladite seconde partie (12b) par rapport à ladite première partie (12a), dans lequel ledit deuxième angle de rotation a une largeur supérieure audit premier angle de rotation.

6. Dispositif (1) selon une ou plusieurs des revendications précédentes, **caractérisé par le fait que** lesdits premiers moyens de commande (3) sont du type mécanique et comprennent au moins un premier câble inextensible associé à ladite première partie (12a), cette dernière étant adaptée pour tirer sur ledit premier câble à la suite de sa rotation vers ladite position de freinage.

7. Dispositif (1) selon une ou plusieurs des revendications précédentes, **caractérisé par le fait que** lesdits deuxièmes moyens de commande (5) sont du type mécanique et comprennent un deuxième câble inextensible (18) associé à ladite seconde partie (12b), cette dernière étant adaptée pour tirer sur ledit deuxième câble (18) à la suite de sa rotation vers ladite position de freinage.

8. Dispositif (1) selon une ou plusieurs des revendications précédentes, **caractérisé par le fait que** lesdits troisièmes moyens de commande (20) sont du type mécanique et comprennent un troisième câble inextensible (21), ledit levier de commande (22) étant associé audit troisième câble (21) et étant adapté pour ne pas tirer sur et pour tirer sur le troisième câble lui-même à la suite de la rotation le long de ladite première direction (32) et le long de ladite seconde direction (33), respectivement.

9. Dispositif (1) selon la revendication 8, **caractérisé par le fait que** ledit levier de commande (22) est adapté pour tirer sur ledit troisième câble (21), pour l'amener à partir de la position de fonctionnement normale jusqu'à la position de stationnement, à la suite de la rotation de ladite première et ladite seconde partie (12a, 12b) autour dudit axe (X) par rapport audit corps (2) selon un troisième angle de rotation prédéfini.

10. Dispositif (1) selon une ou plusieurs des revendications 1 à 7, **caractérisé par le fait que** lesdits troisièmes moyens de commande (20) sont du type électrique.

11. Dispositif (1) selon la revendication 10, **caractérisé par le fait que** lesdits moyens d'activation (8) comprennent au moins un élément d'activation (34) connecté électriquement auxdits troisièmes moyens de commande (20) et mobile entre une première et une seconde position de travail dans lesquelles il amène les troisièmes moyens de commande eux-mêmes à la position de fonctionnement normale et à la position de stationnement respectivement, ledit levier de commande (22) étant connecté de manière fonctionnelle audit élément d'activation (34) pour l'amener à la première position de travail à la suite de la rotation le long de ladite première direction (32) et pour l'amener à la seconde position de travail à la suite de la rotation le long de ladite seconde direction (33).

12. Dispositif (1) selon la revendication 11, **caractérisé par le fait que** lesdits troisièmes moyens de commande (20) comprennent au moins un circuit électrique (6) connecté de manière fonctionnelle audit appareil de contrôle (10), ce dernier permettant et empêchant l'écoulement du fluide de travail le long de ladite ligne supplémentaire (11) à la suite du passage et de la coupure de courant le long dudit circuit électrique (6), respectivement, et **par le fait que** ledit élément d'activation (34) est adapté pour fermer et ouvrir ledit circuit électrique (6) dans la première et la seconde position de travail, respectivement.
